# EUROPÄISCHE PATENTSCHRIFT

(11) **EP 3 406 509 B1**
(45) Veröffentlichungstag und Bekanntmachung des Hinweises auf die Patenterteilung: **15.07.2020**
(21) Anmeldenummer: 18172993.0
(22) Anmeldetag: 17.05.2018
(51) Int. Cl.: B62J 1/16, B62J 7/04, B62J 11/00, B62K 19/40, B62K 3/02

(54) **FAHRRADRAHMEN**
BICYCLE FRAME
CADRE DE VÉLO

(30) Priorität: 24.05.2017 DE 102017111377
(43) Veröffentlichungstag der Anmeldung: 28.11.2018
(73) Patentinhaber: Kettler Alu-Rad GmbH, 50739 Köln (DE)
(72) Erfinder: FIEGL, Thomas, 64367 Mühltal (DE); POHL, Achim, 64342 Seeheim-Jugenheim (DE)
(74) Vertreter: WSL Patentanwälte Partnerschaft mbB

(56) Entgegenhaltungen:
- EP-A1- 2 236 397
- DE-A1-102007 004 853
- DE-U1- 29 918 828
- DE-U1-202009 011 771
- JP-A- 2010 023 817
- JP-U- S5 673 691
- US-A1- 2006 196 322

## Beschreibung

Die vorliegende Erfindung betrifft einen Fahrradrahmen mit einem Sitzrohr, einem Befestigungsbügel für einen Kindersitz und einem Verbindungselement mit dem der Befestigungsbügel an dem Fahrradrahmen befestigt ist.

Fahrradrahmen bilden die tragende Struktur eines jeden Fahrrads und sind in vielfältiger Weise aus dem Stand der Technik bekannt. Während das Sitzrohr des Fahrradrahmens mit einem Fahrradsattel verbunden werden kann, kann mit dem Befestigungsbügel ein Kindersitz an dem Fahrradrahmen befestigt werden. Der Befestigungsbügel selbst ist über ein Verbindungselement mit dem Fahrradrahmen befestigt.

DE 10 2007 004853 A1 offenbart alle Merkmale des Oberbegriffs des Anspruchs 1.

Ein solcher Fahrradrahmen ist aus der deutschen Patentanmeldung DE 32 06 935 A1 bekannt, wobei das Verbindungselement ein U-förmiger Bügel ist, der eine Strebe des Fahrradrahmens umgreift und mit einer Schraubverbindung fixiert wird. Entsprechend aufwendig ist die Montage bzw. Demontage des Befestigungsbügels, die sowohl Werkzeug als auch die Handhabung mehrere Bauteile erfordert. Der mit der Montage bzw. Demontage verbundene Aufwand führt dazu, dass der Befestigungsbügel mit einem Kindersitz selbst dann an dem Fahrradrahmen montiert bleibt, wenn der Kindersitz nicht benötigt wird.

Der montierte, ungenutzte Kindersitz verleidet einigen Fahrradbesitzern den Spaß am Fahrradfahren, da das Fahrrad mehr als Familienfahrzeug und nicht als Sportgerät wahrgenommen wird. Abgesehen von dem persönlichen Empfinden der Fahrradbesitzer, stellt ein an dem Fahrradrahmen montierter, aber nicht benutzter Kindersitz, ein Zusatzgewicht dar, welches eingespart werden könnte. Ist ein Kindersitz über den Befestigungsbügel mit dem Fahrradrahmen verbunden, kann außerdem der meist unter dem Kindersitz angeordnete Gepäckträger nicht genutzt werden. Die Nutzungsvielfältigkeit eines Fahrrads wird durch einen an dem Fahrradrahmen montierten Kindersitz eingeschränkt.

Eine Aufgabe der vorliegenden Erfindung ist es daher, einen Fahrradrahmen bereitzustellen, der eine einfache und schnelle Montage bzw. Demontage eines Kindersitzes ermöglicht und die Nutzungsvielfalt des Fahrradrahmens erhält.

Zumindest eine dieser Aufgaben wird durch einen Fahrradrahmen der eingangs genannten Art gelöst, wobei das Verbindungselement unlösbar mit dem Fahrradrahmen verbunden und der Befestigungsbügel lösbar an dem Verbindungselement befestigt ist.

Da das Verbindungselement unlösbar mit dem Fahrradrahmen verbunden ist, muss das Verbindungselement nicht montiert oder demontiert werden, sodass der Aufwand für die Montage bzw. Demontage des Befestigungsbügels insgesamt im Vergleich gegenüber dem aus dem Stand der Technik bekannten Fahrradrahmen geringer ist. Für eine Montage muss lediglich der Befestigungsbügel an dem Verbindungselement befestigt werden. Für die Demontage wird entsprechend die Befestigung des Befestigungsbügels an dem Verbindungselement gelöst.

Eine Verbindung im Sinne der vorliegenden Erfindung ist unlösbar, wenn die Verbindung nur durch eine Beschädigung der miteinander verbundenen Komponenten gelöst werden kann. Insofern ist eine Verbindung lösbar, wenn die miteinander verbundenen Komponenten ohne eine Beschädigung voneinander getrennt werden können.

Eine im Sinne der vorliegenden Erfindung bevorzugte unlösbare Verbindung ist eine Schweißverbindung oder eine Verbindung, bei der die miteinander verbundenen Elemente einstückig, d.h. nahtlos aus einem Material gefertigt sind. Das unlösbar mit dem Fahrradrahmen verbundene Verbindungselement kann im Vergleich zu dem im Stand der Technik bekannten Verbindungselementen, robuster ausgestaltet sein und auf diese Weise größere Kräfte aufnehmen.

In einer Ausführungsform der vorliegenden Erfindung ist das Verbindungselement unlösbar mit dem Sitzrohr verbunden. Ein unlösbar mit dem Sitzrohr des Fahrradrahmens verbundenes Verbindungselement ist platzsparend an dem Fahrradrahmen angeordnet. Da das Sitzrohr zudem für die Aufnahme der Gewichtskraft des Fahrradfahrers ausgestaltet ist, ist das Sitzrohr für die Aufnahme vergleichsweise großer Kräfte und Drehmomente geeignet. Insofern ist ein unlösbar mit dem Sitzrohr verbundenes Verbindungselement für eine Übertragung der von dem Befestigungsbügel in das Verbindungselement eingeleiteten Kräfte und Drehmomente geeignet.

Es versteht sich, dass ein Sitzrohr im Sinne der vorliegenden Erfindung nicht zylindrisch sein oder ein Hohlkörper bilden muss. Jeder zur Verbindung mit einem Fahrradsattel vorgesehene Abschnitt eines Fahrradrahmens ist ein Sitzrohr im Sinne der vorliegenden Erfindung.

Für eine einfache Montage und Demontage weisen in einer Ausführungsform der vorliegenden Erfindung das Verbindungselement und der Befestigungsbügel ineinandergreifende Abschnitte auf, wobei vorzugsweise der Befestigungsbügel einen Einsteckdorn, vorzugsweise zwei Einsteckdorne, und das Verbindungselement je eine Aufnahme für jeden Einsteckdorn aufweist, wobei jeder Einsteckdorn mit der ihm zugeordneten Aufnahme in Eingriff steht. Die ineinandergreifenden Abschnitte verbinden das Verbindungselement und den Befestigungsbügels miteinander. Weist der Befestigungsbügel einen Einsteckdorn, vorzugsweise zwei Einsteckdorne, und das Verbindungselement je eine Aufnahme für jeden Einsteckdorn auf, kann der Befestigungsbügel durch Einbringen eines jeden Einsteckdorns in die dafür vorgesehen Aufnahme des Verbindungselementes montiert werden. Für ein Lösen des Befestigungsbügels wird jeder Einsteckdorn aus seiner ihm zugeordneten Aufnahme des Verbindungselementes gelöst. Die Ausrichtung des Befestigungsbügels ist durch die Ausrichtung der für die Einsteckdorne vorgesehenen Aufnahmen in dem Verbindungselement vorgegeben, sodass eine ansonsten aufwendige Ausrichtung des Befestigungsbügels entfällt.

In einer Ausführungsform weist das Verbindungselement und/oder ein das Verbindungselement ergänzendes Ergänzungselement ein Verriegelungsmechanismus auf, mit dem der Befestigungsbügel an dem Verbindungselement befestigt ist, wobei der Verriegelungsmechanismus vorzugsweise ein Federmechanismus umfasst.

Weist das Verbindungselement ein Verriegelungsmechanismus auf, kann der Befestigungsbügel schnell und einfach an dem Verbindungselement befestigt werden. Entsprechend kann der Befestigungsbügel schnell und einfach mit dem Ergänzungselement befestigt werden, wenn das Ergänzungselement den Verriegelungsmechanismus aufweist.

Ein Ergänzungselement im Sinne der vorliegenden Erfindung ist ein lösbarer Teil des Verbindungselements, wie zum Beispiel ein Deckel oder ein Einschub, der eine Aussparung in dem Verbindungselement verschließt oder das Verbindungselement verstärkt, und auf diese Weise das Verbindungselement ergänzt. Beispielsweise kann das Ergänzungselement eine Aussparung des Verbindungselementes abdecken, in der ein Teil des Befestigungsbügels eingeführt ist. Vorzugsweise ist in der mit dem Ergänzungselement verschließbaren Aussparung der Verriegelungsmechanismus angeordnet. Wird das Ergänzungselement von dem Verbindungselement gelöst und so die Aussparung in dem Verbindungselement offengelegt, kann der in der Aussparung angeordnete Teil des Befestigungsbügels oder der Verriegelungsmechanismus gewartet werden. In Ausführungsformen der vorliegenden Erfindung ist das Ergänzungselement platten- oder keilförmig.

Ein Verriegelungsmechanismus im Sinne der vorliegenden Erfindung umfasst vorzugsweise ein betätigbares Verriegelungselement, welches den Befestigungsbügel form- und/oder kraftschlüssig arretiert. Umfasst der Verriegelungsmechanismus einen Federmechanismus, so ist im Sinne der vorliegenden Erfindung vorzugsweise das Verriegelungselement durch den Federmechanismus betätigbar. Wird der Federmechanismus ausgelöst, wird das Verriegelungselement betätigt und der Befestigungsbügel ist von dem Verbindungselement lösbar bzw. an dem Verbindungselement befestigbar.

In einer Ausführungsform umfasst der Verriegelungsmechanismus ein Rastmechanismus. Beispielsweise kann der Befestigungsbügel, vorzugweise jeder Einsteckdorn des Befestigungsbügels ein Rastmittel, und das Verbindungselement, vorzugsweise jede Aufnahme für einen Einsteckdorn, ein mit dem Rastmittel des Befestigungsbügels verrastbares Rastmittel aufweisen. Wird ein Einsteckdorn des Befestigungsmittels in die Aufnahme des Verbindungselementes eingeführt, verrasten die Rastmittel und befestigen so den Befestigungsbügel an dem Verbindungselement.

In einer Ausführungsform der vorliegenden Erfindung stützt das Ergänzungselement das Verbindungselement gegenüber dem Sitzrohr ab, wobei vorzugsweise das Ergänzungselement lösbar an dem Sitzrohr befestigt ist. Ein das Verbindungelement gegenüber dem Sitzrohr abstützendes Ergänzungselement dient der Übertragung von Kräften zwischen dem Verbindungselement und dem Sitzrohr. Ist der Befestigungsbügel mit dem Verbindungselement befestigt und ein Kindersitz mit dem Befestigungsbügel verbunden, werden im Betrieb teils hohe Hebelkräfte über den Befestigungsbügel in das Verbindungselement eingeleitet. Das Ergänzungselement hilft einen Teil der auf das Verbindungselement wirkenden Hebelkräfte aufzunehmen und das Verbindungselement zu entlasten.

In einer Ausführungsform der vorliegenden Erfindung weisen das Verbindungselement und das Ergänzungselement ineinandergreifende Abschnitte auf, wobei vorzugsweise das Verbindungselement eine Ausnehmung aufweist, in die das Ergänzungselement eingreift.

Für eine gute Übertragbarkeit von Kräften weisen in einer Ausführungsform das Sitzrohr und das Ergänzungselement ineinandergreifende Abschnitte auf, wobei vorzugsweise das Ergänzungselement eine Ausnehmung aufweist, die das Sitzrohr abschnittsweise umgreift. Beispielsweise kann die Ausnehmung des Ergänzungselementes abschnittsweise komplementär zu dem Sitzrohr ausgestaltet sein, sodass das Sitzrohr und die Ausnehmung des Ergänzungselementes passgenau ineinandergreifen.

In einer Ausführung der Erfindung weist das Sitzrohr ein erstes Ende zur Aufnahme eines Fahrradsattels auf, wobei das Ergänzungselement auf einer Seite des Verbindungselementes angeordnet ist, welche weiter von dem Ende des Sitzrohres zur Aufnahme eines Fahrradsattels entfernt ist.

In einer Ausführungsform der vorliegenden Erfindung ist das Ergänzungselement aus Kunststoff. Ein aus Kunststoff hergestelltes Ergänzungselement ist einfach und kostengünstig herstellbar. Ein aus Kunststoff hergestelltes Ergänzungselement kann helfen, von dem Befestigungsbügel auf das Verbindungselement übertragene Schwingungen zu dämpfen. Insbesondere bei der Fahrt mit einem Fahrrad, welches einen erfindungsgemäßen Fahrradrahmen aufweist, über Bodenunebenheiten, kann ein mit dem Befestigungsbügel befestigter Kindersitz in Schwingung versetzt werden, die auf das Verbindungselement übertragen werden. Ein das Verbindungselement gegenüber dem Sitzrohr abstützendes Ergänzungselement aus Kunststoff kann die Schwingung dämpfen und den Fahrkomfort für ein in dem Kindersitz mitfahrendes Kind verbessern.

Für eine vielfältige Verwendbarkeit des Fahrradrahmes weist der Fahrradrahmen der vorliegenden Erfindung einen Gepäckträger mit einem Längsträger für die Aufnahme einer Zuladung auf, wobei der Gepäckträger über das Verbindungselement an dem Fahrradrahmen befestigt ist. Der Gepäckträger kann zusätzlich zu dem Befestigungsbügel an dem Verbindungselement befestigt werden.

In einer Ausführungsform ist der Längsträger unlösbar mit dem Verbindungselement verbunden. Ein unlösbar mit dem Verbindungselement verbundener Gepäckträger erfordert keinen Montageaufwand, sondern bietet eine zusätzliche Transportmöglichkeit für Gepäck.

In dem Fahrradrahmen der vorliegenden Erfindung, weist der Längsträger des Gepäckträgers zwei Streben auf, die durch das Verbindungselement und mit einem von dem Verbindungselement beabstandeten Querträger miteinander verbunden sind, wobei der Querträger eine Aussparung zur zumindest teilweisen Aufnahme des Befestigungsbügels aufweist. Der Querträger verstärkt den Gepäckträger und bildet zusammen mit den zwei Streben des Längsträgers eine Auflage für Gepäck. Die Aussparung in dem Querträger bewirkt, dass der Befestigungsbügel beim Aufschwingen in die Aussparung des Querträgers eintauchen kann. Stöße zwischen dem Befestigungsbügel und dem Querträger können auf diese Weise verringert werden.

In einer Ausführungsform sind die zwei Streben des Längsträger durch eine Mehrzahl von Querträgern, vorzugsweise zwei Querträgern, miteinander verbunden, wobei die Querträger voneinander und von dem Verbindungselement beabstandet sind und jeder Querträger eine Aussparung zur zumindest teilweisen Aufnahme des Befestigungsbügels aufweist. Eine Mehrzahl von Querträgern, die die Streben des Längsträgers miteinander verbinden, verstärken den Gepäckträger und ermöglichen eine schwere Zuladung.

Weitere Vorteile, Merkmale und Anwendungsmöglichkeiten der vorliegenden Erfindung werden anhand der vorliegenden Beschreibung einer Ausführungsform und der dazugehörigen Figuren deutlich, wobei gleiche Bezugszeichen auf gleiche Elemente verweisen. Es zeigen:
- Figur 1a: eine perspektivische Explosionsansicht eines Fahrradrahmens gemäß einer ersten Ausführungsform der vorliegenden Erfindung,
- Figur 1b: den Fahrradrahmen aus Figur 1a in einem montierten Zustand,
- Figur 2a: eine perspektivische Explosionsansicht eines Fahrradrahmens gemäßer einer weiteren nicht beanspruchten Ausführungsform
- Figur 2b: den Fahrradrahmen aus Figur 2a in einer weiteren Explosionsansicht,
- Figur 2c: den Fahrradrahmen aus den Figuren 2a und 2b in einem montierten Zustand, und
- Figur 3: ein Fahrradrahmen gemäß einer weiteren nicht beanspruchten Ausführungsform in einer teilweisen Schnittansicht.

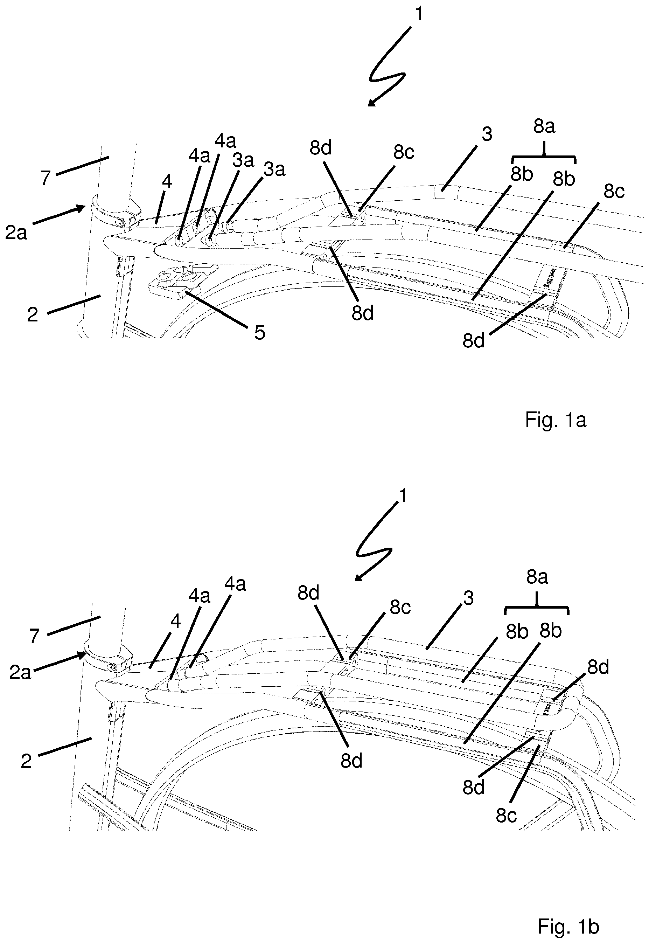

Die Figuren 1 bis 3 zeigen jeweils eine Teilansicht eines Fahrradrahmens 1, 1', 1" gemäß einer Ausführungsform der vorliegenden Erfindung. Die Fahrradrahmen 1, 1', 1" weisen alle ein Sitzrohr 2 mit einem ersten Ende 2a zur Aufnahme eines Fahrradsattels auf, wobei in den Figuren 1 bis 3 der Fahrradsattel lediglich durch eine Fahrradsattelstange 7 angedeutet ist. Zur Veranschaulichung sind in den Figuren 1a und 1b auch ein Schutzblech angedeutet.

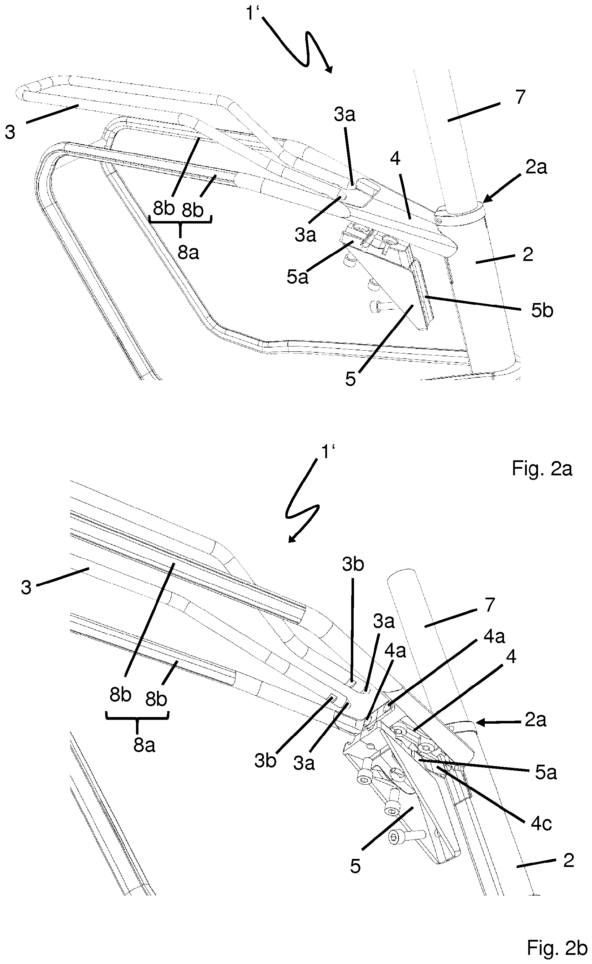

Mit dem Sitzrohr 2 ist ein Verbindungselement 4 unlösbar verbunden. Das Verbindungselement 4 dient der Anbringung eines Befestigungsbügels 3 an dem Fahrradrahmen 1, 1', 1". Der Befestigungsbügel 3 ist lösbar an dem Verbindungselement 4 befestigt, wobei die Figuren 1a, 2a, und 2b Explosionsansichten und damit einen Zustand zeigen, in dem der jeweilige Befestigungsbügel 3 von dem jeweiligen Verbindungselement 4 gelöst ist.

Der Befestigungsbügel 4 der gezeigten Ausführungsformen der Figuren 1 bis 3 hat eine geschwungene Form mit zwei freien Enden an denen jeweils ein Einsteckdorn 3a angeordnet ist. An dem Befestigungsbügel 4 kann ein Kindersitz befestigt werden, sodass der Kindersitz mit dem Befestigungsbügel 4 an dem Fahrradrahmen 1, 1', 1" befestigt werden kann.

Für die Befestigung an dem Verbindungselement 4 sind die Einsteckdorne 3a in entsprechend ausgestaltete Aufnahmen 4a des Verbindungselements 4 eingesteckt. Jedem Einsteckdorn 3a ist eine Aufnahme 4a zugeordnet. Zum Lösen des Befestigungsbügels 3 werden die Einsteckdorne 3a aus den Aufnahmen 4a des Verbindungselements 4 herausgezogen und so der Befestigungsbügel 3 und das Verbindungselement 4 getrennt.

In der Ausführungsform gemäß den Figuren 1a und 1b wird das Verbindungselement 4 durch ein Ergänzungselement 5 ergänzt. Das Verbindungselement 4 und das Ergänzungselement 5 dienen gemeinsam der Befestigung der Befestigungsbügels 3. Das Ergänzungselement 5 ist eine Abdeckplatte, die in eine Vertiefung auf der Unterseite des Verbindungselements 4 eingesetzt wird, wobei das Ergänzungselement 5 und das Verbindungselement 4 ineinandergreifende Abschnitte aufweisen, die in den Figuren 1a und 1b nicht dargestellt sind. Das Ergänzungselement 5 und das Verbindungselement 4 sind beide aus dem gleichen Material hergestellt.

Der Fahrradrahmen 1 gemäß der in den Figuren 1a und 1b gezeigten Ausführungsform weist einen Gepäckträger mit einem Längsträger 8a für die Aufnahme einer Zuladung auf. Der Längsträger 8a umfasst zwei Streben 8b, die durch das Verbindungselement 4 und zwei voneinander und von dem Verbindungselement 4 beabstandete Querträger 8c verbunden sind. Jeder Querträger 8c weist zwei Aussparungen 8d zur zumindest teilweisen Aufnahme des Befestigungsbügels 3 auf. Schwingt der Befestigungsbügel 3 im Betrieb des Fahrradrahmens 1 auf, kann der Befestigungsbügel 3 teilweise in die Aussparungen 8d der Querträger 8c eintauchen. Auf diese Weise werden Stöße zwischen dem Befestigungsbügel 3 und dem Gepäckträger weitestgehend vermieden.

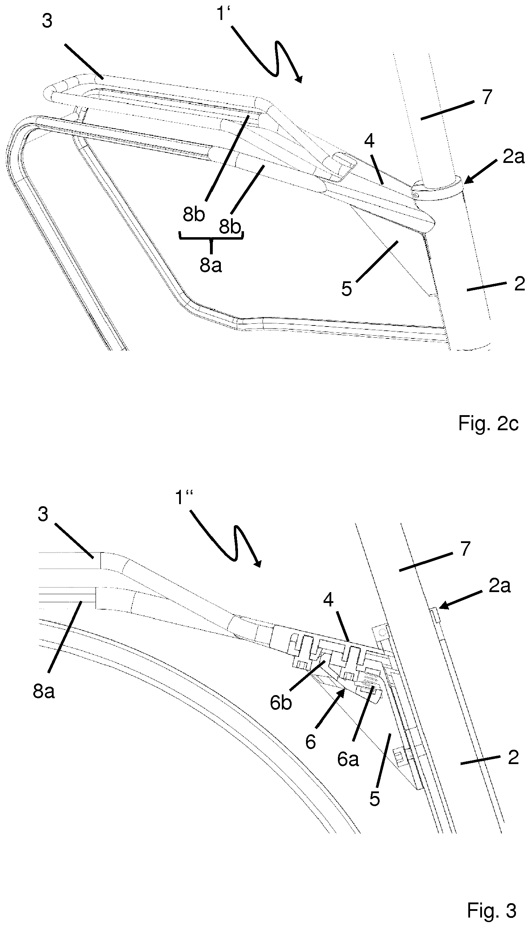

In den nicht beanspruchten Ausführungsformen gemäß den Figuren 2 bis 3 wird das Verbindungselement 4 ebenfalls durch ein Ergänzungselement 5 ergänzt. Das Ergänzungselement 5 ist keilförmig und auf einer Seite des Verbindungselementes 4 angeordnet, welche weiter von dem Ende 2a des Sitzrohres 2 zur Aufnahme des Fahrradsattels entfernt angeordnet ist. In den Figuren 2 bis 3 erkennbar, ist das Ergänzungselement 5 unterhalb des Verbindungselements 4 angeordnet und in eine Vertiefung 4 des Verbindungselements 4 eingesetzt. Das Ergänzungselement 5 ist aus Kunststoff.

Das Verbindungselement 4 und das Ergänzungselement 5 weisen ineinandergreifende Abschnitte 4b, 5a auf. Das Ergänzungselement 5 wird mit dem Abschnitt 5a in eine den Abschnitt 5a umfassende Vertiefung 4c eingesetzt. Das Ergänzungselement 5 erstreckt sich teilweise entlang des Sitzrohres 2, wobei das Ergänzungselement 5 eine Ausnehmung 5b aufweist. Die Ausnehmung 5b bildet einen Abschnitt zum in Eingriff bringen mit einem Abschnitt des Sitzrohres 2. Auf diese Weise stützt das Ergänzungselement 5 das Verbindungselement 4 gegenüber dem Sitzrohr 2 ab, wobei von dem Befestigungsbügel 3 in das Verbindungselement 4 eingeleitete Kräfte über das Ergänzungselement 5 auf das Sitzrohr 2 übertragen werden können.

Das Ergänzungselement 5 ist sowohl mit dem Verbindungselement 4 als auch mit dem Sitzrohr 2 befestigbar. Bei den gezeigten nicht beanspruchten Ausführungsformen der Figuren 2 bis 3 sind das Ergänzungselement 5 mit dem Verbindungselement 4 und dem Sitzrohr 2 verschraubt.

Das Ergänzungselement 5 der in den Figuren 2a, 2b, 2c und 3 gezeigten nicht beanspruchten Ausführungsformen weist ein Verriegelungsmechanismus 6 auf, welches ein Rastmechanismus 6b umfasst. Der Rastmechanismus 6b greift in Aussparungen 3b des Befestigungsbügels 3 ein und fixiert so den Befestigungsbügel 4 in dem Verbindungselement 4.

In der nicht beanspruchten Ausführungsform der Figur 3, die eine teilweise Schnittansicht zeigt, umfasst der Verriegelungsmechanismus 6 einen Federmechanismus 6a mit dem die Verriegelung des Befestigungsbügels 3 in dem Verbindungselement 4 betätigt werden kann. Der Befestigungsbügel 3 ist ohne Werkzeug durch Betätigen des Federmechanismus 6a an dem Verbindungselement 4 und somit dem Fahrradrahmen 2 montierbar bzw. demontierbar.

Der Fahrradrahmen 1', 1" der in den Figuren 2 und 3 gezeigten nicht beanspruchten Ausführungsformen weist einen Gepäckträger 8 mit einem Längsträger 8a auf, wobei der Längsträger 8a zwei Streben 8b aufweist. Die Streben 8b sind unlösbar mit dem Verbindungselement 4 verbunden.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarerer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

### Bezugszeichenliste

- 1: Fahrradrahmen
- 1', 1": Fahrradrahmen
- 2: Sitzrohr
- 2a: erstes Ende des Sitzrohres zur Aufnahme eines Fahrradsattels
- 3: Befestigungsbügel
- 3a: Einsteckdorn des Befestigungsbügels
- 3b: Aussparungen zum Eingreifen des Rastmechanismus
- 4: Verbindungselement
- 4a: Aufnahme für Befestigungsbügel
- 4b: Abschnitt zum in Eingriff bringen mit dem Ergänzungselement
- 4c: Ausnehmung
- 5: Ergänzungselement
- 5a: Abschnitt zum in Eingriff bringen mit dem Verbindungselement
- 5b: Ausnehmung
- 6: Verriegelungsmechanismus
- 6a: Federmechanismus
- 6b: Rastmechanismus
- 7: Fahrradsattelstange
- 8a: Längsträger
- 8b: Strebe des Längsträgers
- 8c: Querträger
- 8d: Aussparung des Querträgers

## Patentansprüche

1. Fahrradrahmen (1, 1', 1") mit einem Sitzrohr (2), einem Befestigungsbügel (3) für einen Kindersitz und einem Verbindungselement (4) mit dem der Befestigungsbügel (3) an dem Fahrradrahmen (1, 1', 1") befestigt ist,
wobei
das Verbindungselement (4) unlösbar mit dem Fahrradrahmen (1, 1', 1") verbunden und der Befestigungsbügel (3) lösbar an dem Verbindungselement (4) befestigt ist und
der Fahrradrahmen (1, 1', 1") einen Gepäckträger mit einem Längsträger (8a) für die Aufnahme einer Zuladung aufweist, wobei der Gepäckträger über das Verbindungselement (4) an dem Fahrradrahmen (1, 1', 1") befestigt ist, **dadurch gekennzeichnet, dass** der Längsträger (8a) zwei Streben (8b) aufweist, die durch das Verbindungselement (4) und mit einem von dem Verbindungselement (4) beabstandeten Querträger (8c) verbunden sind, wobei der Querträger (8c) eine Aussparung (8d) zur zumindest teilweisen Aufnahme des Befestigungsbügels (3) aufweist.

2. Fahrradrahmen (1, 1 1") nach Anspruch 1, **dadurch gekennzeichnet, dass** das Verbindungselement (4) unlösbar mit dem Sitzrohr (2) verbunden ist.

3. Fahrradrahmen (1, 1', 1") nach Anspruch 1 oder 2, **dadurch gekennzeichnet, dass** das Verbindungselement (4) und der Befestigungsbügel (3) ineinandergreifende Abschnitte aufweisen, wobei vorzugsweise der Befestigungsbügel (3) einen Einsteckdorn (3a), vorzugsweise zwei Einsteckdorne (3a), und das Verbindungselement (4) je eine Aufnahme (4a) für jeden Einsteckdorn (3a) aufweist, wobei jeder Einsteckdorn (3a) mit der ihm zugeordneten Aufnahme (4a) in Eingriff steht.

4. Fahrradrahmen (1) nach einem der Ansprüche 1 bis 3, **dadurch gekennzeichnet, dass** das Verbindungselement (4) und/oder ein das Verbindungselement (4) ergänzendes Ergänzungselement (5) ein Verriegelungsmechanismus (6) aufweist, mit dem der Befestigungsbügel (3) an dem Verbindungselement (4) befestigt ist, wobei der Verriegelungsmechanismus (6) vorzugsweise ein Federmechanismus (6a) umfasst.

5. Fahrradrahmen (1, 1', 1") nach Anspruch 4, **dadurch gekennzeichnet, dass** der Verriegelungsmechanismus (6) ein Rastmechanismus (6b) umfasst.

6. Fahrradrahmen (1, 1', 1") nach Anspruch 4 oder 5, **dadurch gekennzeichnet, dass** das Ergänzungselement (5) das Verbindungselement (4) gegenüber dem Sitzrohr (2) abstützt, wobei vorzugsweise das Ergänzungselement (5) lösbar an dem Sitzrohr (2) befestigt ist.

7. Fahrradrahmen (1, 1', 1") nach Anspruch 6, **dadurch gekennzeichnet, dass** das Verbindungselement (4) und das Ergänzungselement (5) ineinandergreifende Abschnitte (4b, 5a) aufweisen, wobei vorzugsweise das Verbindungselement (4) eine Ausnehmung (4c) aufweist, in die das Ergänzungselement (5) eingreift.

8. Fahrradrahmen (1, 1', 1") nach einem der Ansprüche 4 bis 7, **dadurch gekennzeichnet, dass** das Sitzrohr (2) und das Ergänzungselement (5) ineinandergreifende Abschnitte aufweist, wobei vorzugsweise das Ergänzungselement (5) eine Ausnehmung (5b) aufweist, die das Sitzrohr (2) abschnittsweise umgreift.

9. Fahrradrahmen (1, 1', 1") nach einem der Ansprüche 4 bis 8, **dadurch gekennzeichnet, dass** das Sitzrohr (2) ein erstes Ende (2a) zur Aufnahme eines Fahrradsattels (7) aufweist und das Ergänzungselement (5) auf einer Seite des Verbindungselementes (4) angeordnet ist, welche weiter von dem Ende (2a) des Sitzrohres (2) zur Aufnahme eines Fahrradsattels (7) entfernt ist.

10. Fahrradrahmen (1, 1', 1") nach einem der Ansprüche 4 bis 9, **dadurch gekennzeichnet, dass** das Ergänzungselement (5) aus Kunststoff ist.

11. Fahrradrahmen (1, 1', 1") nach einem der Ansprüche 1 bis 10, **dadurch gekennzeichnet, dass** der Längsträger (8a) unlösbar mit dem Verbindungselement (4) verbunden ist.

12. Fahrradrahmen (1, 1', 1") nach einem der Ansprüche 1 bis 11, **dadurch gekennzeichnet, dass** die zwei Streben (8b) des Längsträger (8a) durch eine Mehrzahl von Querträgern (8c), vorzugsweise zwei Querträgern (8c), miteinander verbunden sind, wobei die Querträger (8c) voneinander und von dem Verbindungselement (4) beabstandet sind und jeder Querträger (8c) eine Aussparung (8d) zur zumindest teilweisen Aufnahme des Befestigungsbügels (3) aufweist.

## Claims

1. A bicycle frame (1, 1', 1") with a seat tube (2), a mounting bracket (3) for a child's seat and a connecting element (4) with which the mounting bracket (3) is secured to the bicycle frame (1, 1', 1"),
wherein
the connecting element (4) is non-releasably connected to the bicycle frame (1, 1', 1") and the mounting bracket (3) is releasably secured to the connecting element (4) and the bicycle frame (1, 1', 1") has a carrier with a longitudinal member (8a) for receiving a load, wherein the carrier is secured to the bicycle frame (1, 1', 1") via the connecting element (4), **characterized in that** the longitudinal member (8a) has two struts (8b) which are connected together by means of the connecting element (4) and with a cross member (8c) which is separated from the connecting element (4), wherein the cross member (8c) has an opening (8d) for at least partially receiving the mounting bracket (3).

2. The bicycle frame (1, 1', 1") according to claim 1, **characterized in that** the connecting element (4) is non-releasably connected to the seat tube (2).

3. The bicycle frame (1, 1', 1") according to claim 1 or claim 2, **characterized in that** the connecting element (4) and the mounting bracket (3) have interlocking sections, wherein preferably, the mounting bracket (3) is provided with an insertion pin (3a), preferably two insertion pins (3a), and the connecting element (4) is provided with a receptacle (4a) for each insertion pin (3a), wherein each insertion pin (3a) engages with the receptacle (4a) associated therewith.

4. The bicycle frame (1) according to one of claims 1 to 3, **characterized in that** the connecting element (4) and/or a supplemental element (5) which supplements the connecting element (4) has a locking mechanism (6) with which the mounting bracket (3) is secured to the connecting element (4), wherein the locking mechanism (6) preferably comprises a spring mechanism (6a).

5. The bicycle frame (1, 1', 1") according to claim 4, **characterized in that** the locking mechanism (6) comprises a latching mechanism (6b).

6. The bicycle frame (1, 1', 1") according to claim 4 or claim 5, **characterized in that** the supplemental element (5) braces the connecting element (4) against the seat tube (2), wherein preferably, the supplemental element (5) is releasably secured to the seat tube (2).

7. The bicycle frame (1, 1', 1") according to claim 6, **characterized in that** the connecting element (4) and the supplemental element (5) have interlocking sections (4b, 5a), wherein preferably, the connecting element (4) has a recess (4c) into which the supplemental element (5) engages.

8. The bicycle frame (1, 1', 1") according to one of claims 4 to 7, **characterized in that** the seat tube (2) and the supplemental element (5) have interlocking sections, wherein preferably, the supplemental element (5) has a recess (5b) which encompasses sections of the seat tube (2).

9. The bicycle frame (1, 1', 1") according to one of claims 4 to 8, **characterized in that** the seat tube (2) has a first end (2a) for receiving a bicycle saddle (7), wherein the supplemental element (5) is disposed on a side of the connecting element (4) which is further from the end (2a) of the seat tube (2) for receiving a bicycle saddle (7).

10. The bicycle frame (1, 1', 1") according to one of claims 4 to 9, **characterized in that** the supplemental element (5) is produced from plastic.

11. The bicycle frame (1, 1', 1") according to one of claims 1 to 10, **characterized in that** the longitudinal member (8a) is non-releasably connected to the connecting element (4).

12. The bicycle frame (1, 1', 1") according to one of claims 1 to 11, **characterized in that** the two struts (8b) of the longitudinal member (8a) are connected together by means of a plurality of cross members (8c), preferably two cross members (8c), wherein the cross members (8c) are separated from each other and from the connecting element (4) and each cross member (8c) has an opening for receiving at least a portion of the mounting bracket (3).

## Revendications

1. Cadre de bicyclette (1, 1', 1") comprenant un tube de selle (2), un arceau de fixation (3) pour un siège d'enfant et un élément de liaison (4) par lequel l'arceau de fixation (3) est fixé sur le cadre de bicyclette (1, 1', 1"),
l'élément de liaison (4) étant relié de manière non amovible au cadre de bicyclette (1, 1', 1") et l'arceau de fixation (3) étant fixé de manière amovible à l'élément de liaison (4) et
le cadre de bicyclette (1, 1', 1") comprenant un porte-bagage ayant un longeron (8a) destiné à recevoir une charge à transporter, le porte-bagage étant relié au cadre de bicyclette (1, 1', 1") via l'élément de liaison (4),
**caractérisé en ce que** le longeron (8a) comprend deux barres (8b) qui sont reliées par l'élément de liaison (4) et à une traverse (8c) espacée de l'élément de liaison (4), la traverse (8c) présentant un évidement (8d) destiné à recevoir au moins partiellement l'arceau de fixation (3).

2. Cadre de bicyclette (1, 1', 1") selon la revendication 1, **caractérisé en ce que** l'élément de liaison (4) est relié de manière non amovible au tube de selle (2).

3. Cadre de bicyclette (1, 1', 1") selon la revendication 1 ou 2, **caractérisé en ce que** l'élément de liaison (4) et l'arceau de fixation (3) comprennent des segments s'engageant les uns dans les autres, de préférence l'arceau de fixation (3) comprenant une tige à enficher (3a), de préférence deux tiges à enficher (3a), et l'élément de liaison (4) comprenant un logement (4a) pour chaque tige à enficher (3a), chaque tige à enficher (3a) étant engagée dans le logement (4a) qui lui est associé.

4. Cadre de bicyclette (1, 1', 1") selon l'une des revendications 1 à 3, **caractérisé en ce que** l'élément de liaison (4) et/ou un élément complémentaire (5) complétant l'élément de liaison (4) comprend un mécanisme de verrouillage (6) par lequel l'arceau de fixation (3) est fixé sur l'élément de liaison (4), le mécanisme de verrouillage (6) comprenant de préférence un mécanisme à ressort (6a).

5. Cadre de bicyclette (1, 1', 1") selon la revendication 4, **caractérisé en ce que** le mécanisme de verrouillage (6) comprend un mécanisme d'encliquetage (6b).

6. Cadre de bicyclette (1, 1', 1") selon la revendication 4 ou 5, **caractérisé en ce que** l'élément complémentaire (5) soutient l'élément de liaison (4) par rapport au tube de selle (2), l'élément complémentaire (5) étant fixé de manière amovible au tube de selle (2).

7. Cadre de bicyclette (1, 1', 1") selon la revendication 6, **caractérisé en ce que** l'élément de liaison (4) et l'élément complémentaire (5) comprennent des segments (4b, 5a) s'engageant les uns dans les autres, de préférence l'élément de liaison (4) comprenant un évidement (4c) dans lequel l'élément complémentaire (5) s'engage.

8. Cadre de bicyclette (1, 1', 1") selon l'une des revendications 4 à 7, **caractérisé en ce que** le tube de selle (2) et l'élément complémentaire (5) comprennent des segments s'engageant les uns dans les autres, de préférence l'élément complémentaire (5) comprenant un évidement (5b) qui entoure le tube de selle (2) sur un segment.

9. Cadre de bicyclette (1, 1', 1") selon l'une des revendications 4 à 8, **caractérisé en ce que** le tube de selle (2) comprend une première extrémité (2a) destinée à recevoir une selle de bicyclette (7) et que l'élément complémentaire (5) est disposé sur un côté de l'élément de liaison (4) qui est plus éloigné de l'extrémité (2a) du tube de selle (2) destiné à recevoir une selle de bicyclette (7).

10. Cadre de bicyclette (1, 1', 1") selon l'une des revendications 4 à 9, **caractérisé en ce que** l'élément complémentaire (5) est en matière synthétique.

11. Cadre de bicyclette (1, 1', 1") selon l'une des revendications 1 à 10, **caractérisé en ce que** le longeron (8a) est relié de manière non amovible à l'élément de liaison (4).

12. Cadre de bicyclette (1, 1', 1") selon l'une des revendications 1 à 11, **caractérisé en ce que** les deux barres (8b) du longeron (8a) sont reliées entre elles par une pluralité de traverses (8c), de préférence par deux traverses (8c), les traverses (8c) étant espacées les unes des autres et de l'élément de liaison (4) et chaque traverse (8c) comprenant un évidement (8d) destiné à recevoir au moins en partie l'arceau de fixation (3).
